# EUROPEAN PATENT APPLICATION

(11) **EP 1 524 584 A2**
(43) Date of publication of application: **20.04.2005**
(21) Application number: 04017343.7
(22) Date of filing: 22.07.2004
(51) Int. Cl.: G06F 1/16

(54) **Allocation structure for wireless cursor transmitter**

(30) Priority: 15.10.2003 DE 20315883 U
(71) Applicant: Topspeed Technology Corp., Chung Ho City Taipei Hsien Taiwan 235 (TW)
(72) Inventor: Chi, Chung-Ping, Taipei (TW)
(74) Representative: TER MEER STEINMEISTER & PARTNER GbR

(57) **Abstract**

An allocation structure for a wireless cursor transmitter, operative to allocate a transmitter in an expansion slot of a portable computer. The transmitter has a card body and a plurality of buttons formed on a top surface of the card body. The buttons are press-control buttons. The bulk body further has a connecting part at one side thereof. The card body is connected to the portable computer by inserting the connecting part into the expansion slot. Thereby, the transmitter is integrated with the portable computer. The access, storage and portability of the transmitter are much easier and convenient for the user.

## Description

### BACKGROUND OF THE INVENTION

The present invention relates to an allocation structure for a wireless cursor transmitter and, more particularly, to a wireless cursor transmitter which can be integrated into a portable computer.

In the past, projectors and slides are frequently used for presentation in meeting or seminar. The development of information technology has replaced the conventional projectors and slides by computer and peripherals. Using computers for presentation has become a trend in meeting or seminar because the computer provides sound effect and dynamic visual effect, such that the presentation is more attractive. The other advantage of the computer presentation includes that information saved in the computer can be updated or modified any time. Therefore, computers, particularly the portable computers have become inevitable tools for business in modem society.

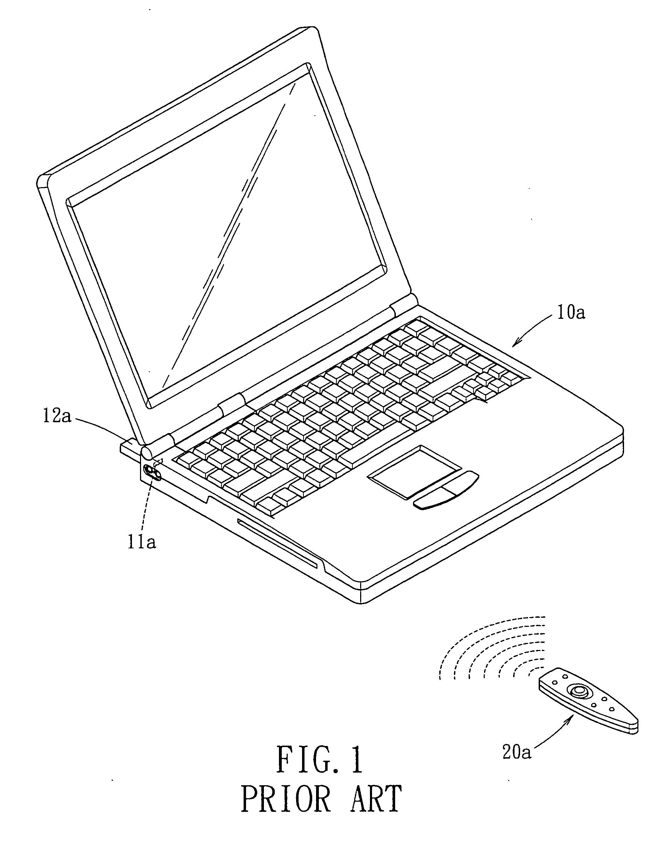

Figure 1 shows a conventional portable computer 10a and a transmitter 20a. The portable computer 10a includes a connecting port 11a for a receiver 12a to plug in. The receiver 12a serves as a receiving device for radio frequency signal. The transmitter 20a includes a power switch and a plurality of push buttons. By pressing the buttons, the cursor displacement is remotely controlled, and a signal generated by calculating the displacement of the cursor is transmitted to the computer host via radio frequency, such that the cursor in the screen is displaced.

The above conventional portable computer 10a and transmitter 20a remotely controls a computer software for presentation. During application, the transmitter 20a is hand held by the user, while the portable computer 10a can be disposed on a platform. However, when both devices are idle, the storages of the portable computer 10a and the transmitter 20a are independent of each other. Therefore, the transmitter 20a is often misplaced or lost

### BRIEF SUMMARY OF THE INVENTION

The present invention provides an allocation structure of a wireless cursor transmitter. The expansion slot of a portable computer is used for allocating the transmitter, such that when the transmitter can be stored together with the computer while being idle. It thus provides great convenience for access and storage.

The allocation structure of a wireless cursor transmitter provided by the present invention comprises a card, which includes a plurality of press buttons formed on a top surface thereof. One end of the card has a connecting part disposable and connectable to an expansion slot of a portable computer.

### BRIEF DESCRIPTION OF THE DRAWINGS

These, as well as other features of the present invention, will become apparent upon reference to the drawings wherein:
Figure 1 shows the conventional portable computer and transmitter;
Figure 2 shows an exploded view of the allocation structure of wireless cursor transmitter provided by the present invention;
Figure 3 shows an enlarged view of area A of Figure 2;
Figure 4 shows the assembly of the allocation structure; and
Figure 5 shows the operation status of the wireless cursor transmitter.

### DETAILED DESCRIPTION OF THE INVENTION

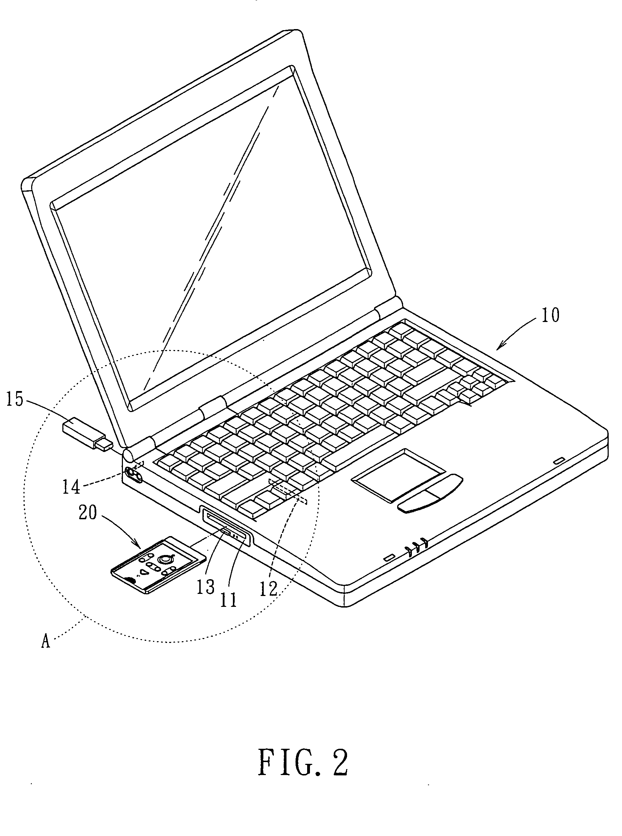

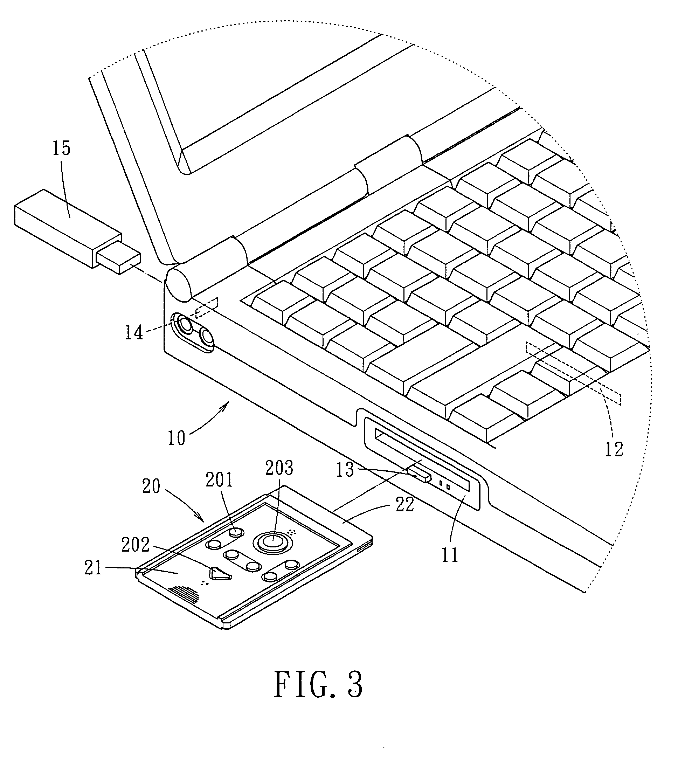

Figures 2 shows an exploded view of an allocation structure of a wireless cursor transmitter, and Figure 3 shows an enlarged view of area A as shown in Figure 2. Figure 2 shows a portable computer 10 and a transmitter 20 disposed in the portable computer 10.

The portable computer 10 includes at least one expansion slot 11, which is a PCMCIA expansion slot for connecting a network card, a modem card or a sound card, for example. The expansion slot 11 includes a common socket 12, and underneath the expansion slot 11, a push lever 13 is installed. One side of the portable computer 10 includes a connecting port 14 (USB specification as shown). The connecting port 14 provides connection for a receiver 15 to serve as a receiving device of radio frequency signal.

The transmitter 20 includes a hand-held device which uses infrared (IR) or radio frequency (RF) signal to remotely control the position of a cursor on the computer screen. The top surface of the transmitter 20 includes functions keys such as page up, down and scrolling key 201, left and right key 202 and an enable key 203. Therefore, the user can remotely apply a computer application such as Power Point for presentation.

In the present invention, the transmitter 20 includes a card 21 which can be inserted into the expansion slot 11 of the portable computer. One end of the card 21 includes a connecting part 22. The connecting part 22 includes a female plug of a PCMCIA card to match the male socket 12 inside of the expansion slot 11. In addition, a power pin can be formed on the connecting part 22. The power pin is then connected to power terminal of the socket 12 for charging the transmitter 20.

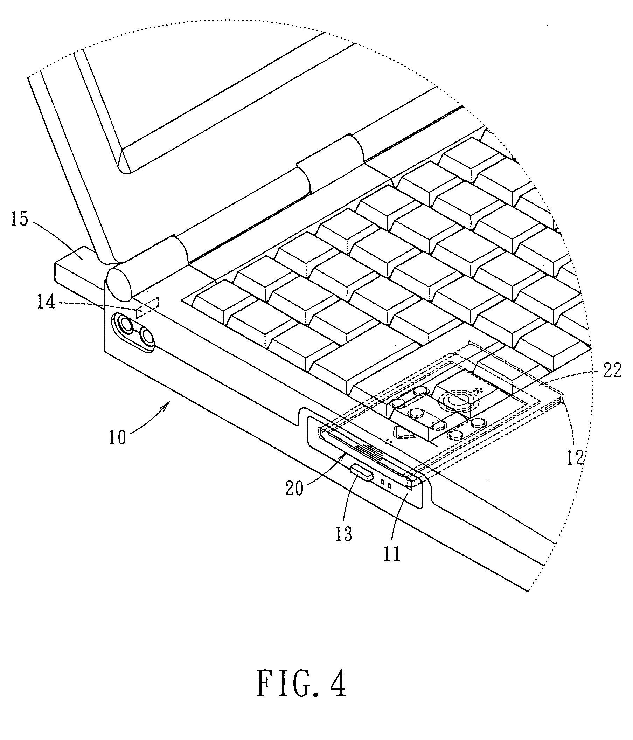

Figure 4 shows the assembly of the portable computer and the transmitter 20. As shown, the card 21 is inserted into the expansion slot 11 by gradually until the connecting part 22 ahead of the card 21 is connected with the socket 12.

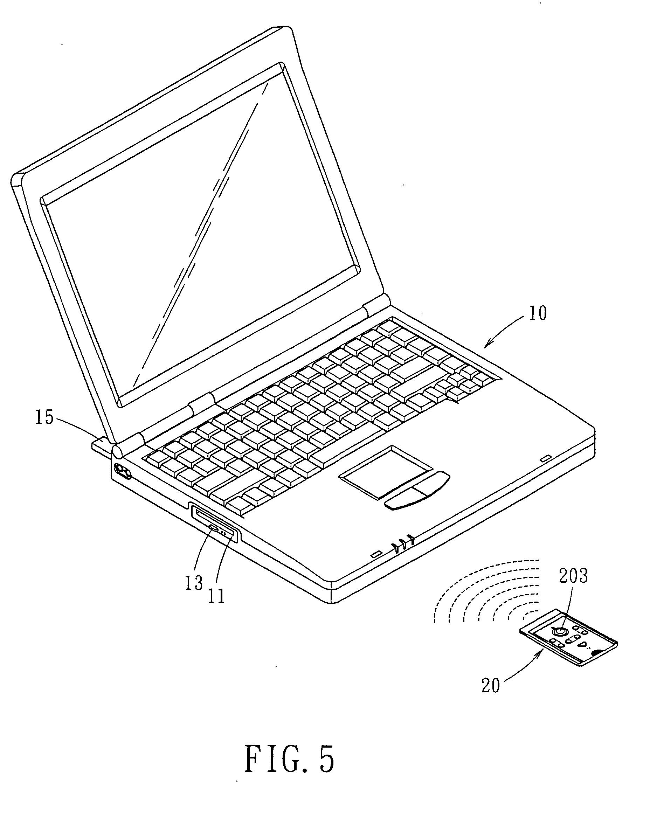

Figure 5 shows the operation status of the portable computer 10 and the transmitter 20. In application, the lever 13 of the portable computer 10 is pressed to eject the transmitter 20. The receiver 15 is then plugged in the connecting port 14 of the portable computer 10. By pressing the enable key 203 of the transmitter 20, the cursor displacement control function is activated. Thereby, the cursor displacement in the screen can be remotely controlled.

Accordingly, the allocation structure of the wireless cursor transmitter provides the following advantages.
1. The expansion slot of the portable computer is sued for accommodating the transmitter, such that convenience of access, storage and portability of the transmitter are greatly improved.
2. The connecting part of the transmitter allows the transmitter to stably integrate with the portable computer to prevent loss or mis-location of the transmitter.

This disclosure provides exemplary embodiments of the present invention. The scope of this disclosure is not limited by these exemplary embodiments. Numerous variations, whether explicitly provided for by the specification or implied by the specification, such as variations in shape, structure, dimension, type of material or manufacturing process may be implemented by one of skill in the art in view of this disclosure.

## Claims

1. An allocation structure for a wireless cursor transmitter for allocating the wireless cursor transmitter into an expansion of a portable computer, the wireless cursor transmitter comprising a card body, a plurality of push buttons formed on a top surface of the card body for pressing control a cursor position in a screen of the portable computer remotely.

2. The allocation structure according to Claim 1, wherein the expansion slot includes a PCMCIA expansion slot.

3. The allocation structure according to Claim 1, wherein the card body includes a connecting part at one end thereof, and the expansion slot includes a socket for connecting the connecting part of the card body.

4. The allocation structure according to Claim 3, wherein the socket includes a PCMCIA socket.
